# NEUE EUROPÄISCHE PATENTSCHRIFT

(11) **EP 3 143 861 B2**
(45) Veröffentlichungstag und Bekanntmachung des Hinweises auf die Entscheidung über den Einspruch: **08.06.2022**
(45) Hinweis auf die Patenterteilung: 21.08.2019
(21) Anmeldenummer: 16188457.2
(22) Anmeldetag: 13.09.2016
(51) Int. Cl.: A01D 34/66

(54) **LANDWIRTSCHAFTLICHES MÄHWERK UND ZUGGESPANN UND VERFAHREN ZUM BETREIBEN DES MÄHWERKS**
AGRICULTURAL MOWER AND TRAILER AND METHOD FOR OPERATING THE MOWER
FAUCHEUSE ET ATTELAGE TRACTÉ ET PROCÉDÉ DE FONCTIONNEMENT DE LA FAUCHEUSE

(30) Priorität: 18.09.2015 DE 102015115829
(43) Veröffentlichungstag der Anmeldung: 22.03.2017
(73) Patentinhaber: CLAAS Saulgau GmbH, 88348 Bad Saulgau (DE)
(72) Erfinder: Speer, Christian, 88348 Bad Saulgau (DE); Epp, Siegfried, 88436 Eberhardzell (DE)

(56) Entgegenhaltungen:
- EP-A2- 1 179 289
- WO-A1-2011/045610
- WO-A1-2015/075356
- DE-A1- 10 157 289
- US-A- 3 473 302
- US-A1- 2007 119 139

## Beschreibung

Die Erfindung betrifft ein landwirtschaftliches Mähwerk nach dem Oberbegriff des Anspruchs 1. Des Weiteren betrifft die Erfindung ein landwirtschaftliches Zuggespann mit einem solchen landwirtschaftlichen Mähwerk.

Ein landwirtschaftliches Zuggespann verfügt über ein landwirtschaftliches Zugfahrzeug und ein von dem Zugfahrzeug gezogenes, landwirtschaftliches Anhängegerät. Beim landwirtschaftlichen Zugfahrzeug handelt es sich typischerweise um einen Traktor. Bei dem vom Zugfahrzeug gezogenen landwirtschaftlichen Anhängegerät kann es sich um einen Schwader, einen Wender, ein Mähwerk oder um ein sonstiges vom Zugfahrzeug gezogenes Anhängegerät handeln, welches über eine große Arbeitsbreite verfügt, sodass das Anhängegerät in seiner Arbeitsstellung hinten seitlich gegenüber dem Zugfahrzeug deutlich vorsteht. Die hier vorliegende Erfindung bezieht sich insbesondere auf ein als Heckmähwerk ausgebildetes landwirtschaftliches Anhängegerät. Um das landwirtschaftliche Anhängegerät mit Hilfe des Zugfahrzeugs nach dem Arbeitseinsatz auf öffentlichen Straßen transportieren zu können, ist das Arbeitsgerät aus der Arbeitsstellung heraus in die Transportstellung verlagerbar, wobei das Anhängegerät in der Transportstellung eine definierte Breite nicht überschreiten darf. Bei aus der Praxis bekannten Heckmähwerken, die über Mäheinheiten verfügen, die in der Arbeitsstellung quer zur Fahrtrichtung des Zugfahrzeugs an den Seiten desselben vorstehen, sind die Mäheinheiten des Heckmähwerks entweder um eine fahrtrichtungsparallele Achse aus einer horizontalen Ausrichtung in eine vertikale Ausrichtung nach oben verlagerbar oder alternativ über eine vertikale Achse nach hinten verlagerbar, sodass dann die Mäheinheiten des Heckmähwerks parallel zur Fahrtrichtung stehen. Mäheinheiten des Heckmähwerks als solche sind dabei als starre Einheiten ausgeführt.

Mit den aus der Praxis bekannten Anhängegeräten, insbesondere Heckmähwerken, kann nur eine eingeschränkte Arbeitsbreite in der Arbeitsstellung realisiert werden, da ansonsten in der Transportstellung straßenverkehrsrechtliche Vorschriften nicht eingehalten werden können, da dann in der Transportstellung das jeweilige Heckmähwerk entweder zu breit und/oder zu hoch oder zu lang ist.

Aus US 2007/0119139 A1 ist ein fünfteiliges Mähwerk bekannt, bestehend aus einem mittleren Mähwerksabschnitt und rechten und linken inneren Mähwerksabschnitten, die an ihren inneren Kanten an entsprechenden äußeren Kanten des mittleren Mähwerksabschnitts schwenkbar befestigt sind, sowie rechten und linken äußeren Mähwerksabschnitten, die an ihren inneren Kanten an entsprechenden rechten und linken äußeren Kanten der rechten und linken inneren Mähwerksabschnitte schwenkbar befestigt sind, wobei ein Transportmechanismus zunächst die äußeren Flügel nach oben und dann die inneren Flügel zu einer aufrechten Position oberhalb der äußeren Kanten des mittleren Abschnitts faltet.

Hiervon ausgehend liegt der vorliegenden Erfindung die Aufgabe zugrunde, ein neuartiges landwirtschaftliches Mähwerk und ein neuartiges landwirtschaftliches Zuggespann zu schaffen.

Diese Aufgabe wird durch ein landwirtschaftliches Mähwerk nach Anspruch 1 gelöst. Die erste Mähwerkeinheit und die zweite Mähwerkeinheit weisen jeweils eine in Arbeitsstellung innere Mähwerkteileinheit und eine in Arbeitsstellung äußere Mähwerkteileinheit auf, wobei im Bereich jeder Mähwerkeinheit die jeweilige äußere Mähwerkteileinheit in einer definierten Schwenkrichtung um eine erste sich etwa in Fahrtrichtung erstreckende, etwa horizontale Achse zur jeweiligen inneren Mähwerkteileinheit sowie die jeweilige äußere und innere Mähwerkteileinheit gemeinsam in dergleichen Schwenkrichtung um eine zweite sich etwa in Fahrtrichtung erstreckende, etwa horizontale Achse insbesondere relativ zu einem Tragelement des Mähwerks verlagerbar sind.

Mit der hier vorliegenden Erfindung wird erstmals ein landwirtschaftliches Mähwerk, insbesondere in Form eines Heckmähwerks vorgeschlagen, welches Mäheinheiten umfasst, die nicht als starre Einheiten ausgeführt sind, sondern vielmehr über relativ zueinander verlagerbare Mähteileinheiten, verfügen. Im Bereich jeder Mäheinheit, ist die jeweilige in Arbeitsstellung äußere Mähteileinheit, um eine erste etwa horizontale Achse zur jeweiligen inneren Mähteileinheit, verlagerbar, wobei die jeweilige äußere und innere Mähteileinheit, gemeinsam in der gleichen Schwenkrichtung um eine zweite sich etwa in Fahrtrichtung erstreckende, etwa horizontale Achse verlagerbar sind.

Hiermit ist es möglich, in der Arbeitsstellung große Arbeitsbreiten eines Mähwerks, insbesondere eines Heckmähwerks, zu realisieren, ferner kann in der Transportstellung desselben gewährleistet werden, dass eine definierte Breite und Höhe des Mähwerks, insbesondere des Heckmähwerks, nicht überschritten wird, sodass dasselbe straßenverkehrsrechtlichen Vorschriften genügt.

Im Bereich der ersten Mäheinheit sind die jeweilige in Arbeitsstellung äußere Mähwerkteileinheit um die jeweilige erste Achse zur jeweiligen inneren Mähwerkteileinheit sowie die jeweilige äußere und innere Mähwerkteileinheit gemeinsam in dergleichen Richtung um die jeweilige zweite Achse schwenkbar, wobei im Bereich der zweiten Mäheinheit die jeweilige in Arbeitsstellung äußere Mähwerkteileinheit um die jeweilige erste Achse zur jeweiligen inneren Mähwerkteileinheit sowie die jeweilige äußere und innere Mähwerkteileinheit gemeinsam in dergleichen Richtung um die jeweilige zweite Achse schwenkbar sind, wobei die Schwenkrichtungen der ersten Mäheinheit zu den Schwenkrichtungen der zweiten Mähwerkeinheiten gegenläufig sind. Dies erlaubt ein besonders vorteilhaftes Überführen des Mähwerks zwischen der Arbeitsstellung und der Transportstellung.

Im Bereich jeder Mähwerkeinheit ist die jeweilige in Arbeitsstellung äußere Mähwerkteileinheit zur jeweiligen inneren Mähwerkteileinheit zwischen einer seitlich neben derselben angeordneten horizontalen Position und einer oberhalb derselben angeordneten horizontalen Position schwenkbar, wobei im Bereich jeder Mähwerkeinheit die jeweilige äußere und innere Mähwerkteileinheit gemeinsam zwischen einer horizontalen Position, in der die jeweilige in Arbeitsstellung äußere Mähwerkteileinheit oberhalb der jeweiligen inneren Mähwerkteileinheit angeordnet ist, und einer vertikalen Position, in der die in Arbeitsstellung äußeren Mähwerkteileinheiten einander zugewandt und die inneren Mähwerkteileinheiten voneinander abgewandt sind, verlagerbar sind. Auch hiermit ist ein besonders vorteilhaftes Verlagern des Mähwerks zwischen der Arbeitsstellung und der Transportstellung möglich.

Das erfindungsgemäße Zuggespann ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Ansicht eines Heckmähwerks in einer Arbeitsstellung;
- Fig. 2: eine Ansicht des Heckmähwerks in einer Zwischenstellung zwischen der Arbeitsstellung und einer Transportstellung;
- Fig. 3: eine Ansicht des Heckmähwerks in der Transportstellung;
- Fig. 4: eine weitere Ansicht des Heckmähwerks in der Arbeitsstellung;
- Fig. 5: eine weitere Ansicht des Heckmähwerks in der Arbeitsstellung;
- Fig. 6: eine Ansicht von unten auf eine Mäheinheit des Heckmähwerks; und
- Fig. 7: eine weitere Ansicht von unten auf die Mäheinheit des Heckmähwerks.

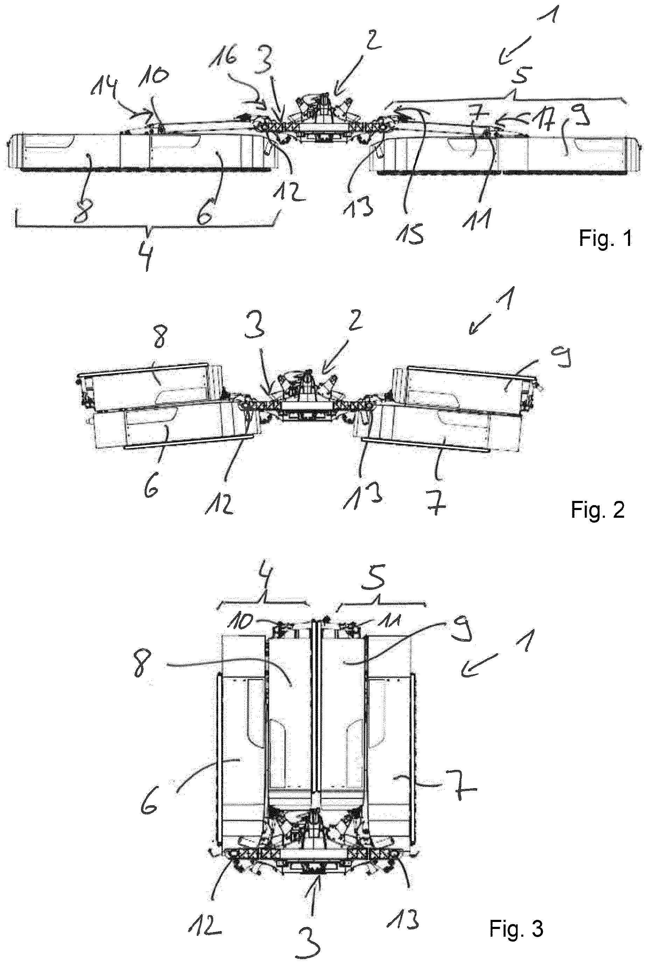

Fig. 1 bis 3 zeigen jeweils Ansichten von hinten auf ein erfindungsgemäßes, als Heckmähwerk 1 ausgebildetes landwirtschaftliches Mähwerk.

Fig. 1 zeigt das Heckmähwerk 1 in einer Arbeitsstellung, Fig. 3 zeigt das Heckmähwerk 1 in einer Transportstellung und Fig. 2 zeigt das Heckmähwerk 1 in einer Zwischenstellung zwischen der Arbeitsstellung und der Transportstellung.

Das Heckmähwerk 1 ist hinten an ein nicht gezeigtes Zugfahrzeug ankoppelbar, und zwar über eine Koppeleinrichtung 2, die an einem Tragelement 3 des Heckmähwerks 1 angreift.

Das Heckmähwerk 1 verfügt über eine erste Mäheinheit 4, die in Arbeitsstellung des Heckmähwerks 1 an einer ersten Seite des Zugfahrzeugs gegenüber demselben quer zur Fahrtrichtung vorsteht, sowie über eine zweite Mäheinheit 5, die in Arbeitsstellung an einer zweiten Seite des Zugfahrzeugs gegenüber demselben quer zur Fahrtrichtung vorsteht.

Die erste Mäheinheit 4 verfügt über eine in Arbeitsstellung innere Mähteileinheit 6 sowie über eine in Arbeitsstellung äußere Mähteileinheit 8. Ebenso verfügt die zweite Mäheinheit 5 über eine in Arbeitsstellung innere Mähteileinheit 7 sowie über eine in Arbeitsstellung äußere Mähteileinheit 9.

Im Bereich jeder Mäheinheit 4 und 5 ist die jeweilige in Arbeitsstellung äußere Mähteileinheit 8 bzw. 9 in einer definierten Schwenkrichtung um eine erste sich etwa in Fahrtrichtung erstreckende, etwa horizontale Achse 10 bzw. 11 relativ zur jeweiligen inneren Mähteileinheit 6 bzw. 7 verlagerbar. Im beschriebenen Ausführungsbeispiel verlaufen die Achsen 10, 11 nahezu parallel zur Fahrtrichtung und nahezu horizontal. Es ist jedoch vorgesehen, dass die Achsen 10, 11 - in einer Draufsicht betrachtet - einen Winkel von bis zu +/-25° mit der Fahrtrichtung einschließen. Zusätzlich oder alternativ können die Achsen 10, 11 gegenüber der Horizontalen um bis zu +/- 5° geneigt werden.

Ferner sind im Bereich jeder Mäheinheit 4, 5 die jeweilige äußere und innere Mähteileinheit 6 und 8 bzw. 7 und 9 gemeinsam in der gleichen Schwenkrichtung um eine zweite sich etwa in Fahrtrichtung erstreckende, etwa horizontale Achse 12 bzw. 13 verlagerbar, vorzugsweise relativ zum Tragelement 3. Im beschriebenen Ausführungsbeispiel verlaufen die Achsen 12, 13 nahezu parallel zur Fahrtrichtung und nahezu horizontal. Es kann jedoch vorgesehen werden, dass die Achsen 12, 13 - in einer Draufsicht betrachtet - einen Winkel von bis zu +/- 25° mit der Fahrtrichtung einschließen. Zusätzlich oder alternativ können die Achsen 12, 13 gegenüber der Horizontalen um bis zu +/- 5° geneigt werden. In Fig. 1 verdeutlichen Pfeile 14, 15, 16 und 17 die jeweiligen Schwenkrichtungen um die obigen Achsen 10, 11, 12 und 13.

Im Bereich der ersten Mäheinheit4 ist demnach die in Arbeitsstellung äußere Mähteileinheit 8 um die Achse 10 zur inneren Mähteileinheit 6 in der Schwenkrichtung 14 verlagerbar, wobei die äußere und innere Mähteileinheit 6, 8 zusammen in der gleichen Schwenkrichtung 16 um die zweite Achse 12 verlagerbar sind. Im Bereich der zweiten Mäheinheit 5 ist die äußere Mähteileinheit 9 relativ zur inneren Mähteileinheit 7 in Schwenkrichtung 17 um die erste Achse 11 verlagerbar, ferner sind wiederum beide Mähteileinheiten 7, 9 gemeinsam in der gleichen Schwenkrichtung 15 um die zweite Achse 13 verlagerbar.

Die Schwenkrichtungen 14, 16 innerhalb der ersten Mäheinheit 4 verlaufen dabei gegenläufig zu den Schwenkrichtungen 15, 17 der zweiten Mäheinheit 5.

Im Bereichjeder Mäheinheit 4, 5 ist die jeweilige in Arbeitsstellung äußere Mähteileinheit 8 bzw. 9 zur jeweiligen inneren Mähteileinheit 6 bzw. 7 zwischen einer seitlich neben derselben angeordneten horizontalen Position und einer oberhalb derselben angeordneten horizontalen Position schwenkbar bzw. verlagerbar, wie dies aus Fig. 2 unmittelbar entnommen werden kann. So sind in der Zwischenstellung zwischen der Arbeitsstellung der Fig. 1 und der Transportstellung der Fig. 3 in Fig. 2 im Bereich beider Mäheinheiten 4 und 5 die Teilmäheinheiten 6,8 bzw. 7,9 jeweils horizontal ausgerichtet und übereinander positioniert.

Ferner sind im Bereich jeder Mäheinheit 4, 5 die äußere und innere Mähteileinheit 6, 8 bzw. 7, 9 gemeinsam zwischen der horizontalen Position der Fig. 2, in der die jeweilige in Arbeitsstellung äußere Mähteileinheit 6 bzw. 9 oberhalb der jeweiligen inneren Mähteileinheit 6 bzw. 7 angeordnet ist, und der in Fig. 3 gezeigten vertikalen Position verlagerbar, wobei in der vertikalen Position der Fig. 3 die in Arbeitsstellung äußeren Mähteileinheiten 8, 9 einander zugewandt und die in Arbeitsstellung inneren Mähteileinheiten 6, 7 voneinander abgewandt sind. Daraus folgt, dass sich zwischen der Arbeitsstellung der Fig. 1 und der Transportstellung der Fig. 3 die Orientierung der Mähteileinheiten 6, 8 bzw. 7, 9 der Mäheinheiten 4 bzw. 5 relativ zueinander ändert, sodass demnach die in der Arbeitsstellung äußeren Mähteileinheiten 8, 9 der Transportstellung innen positioniert sind.

Die Achsen 10 und 11 schließen einen Winkel von bis zu +/- 25° mit der Fahrtrichtung ein und die äußeren Mähteileinheiten 8, 9 liegen winkelversetzt auf den inneren Mähteileinheiten 6 bzw. 7, so dass sich beim Verlagern der Mähteileinheiten 6, 8 bzw. 7, 9 in die vertikale Position im mittleren Bereich ein Freiraum ergibt. Dieser vorteilhafte Freiraum kann für die Tragstruktur 3, für Antriebselemente und/oder für Steuerungselemente genutzt werden. Weiterhin ist es möglich, längere äußere Mähteileinheiten 8, 9 vorzusehen, wodurch vorteilhaft die Arbeitsbreite vergrößert wird.

Aus den obigen Zusammenhängen folgt, dass im Bereich jeder Mäheinheit 4, 5 die jeweilige in Arbeitsstellung äußere Mähteileinheit 8 bzw. 9 zur jeweiligen inneren Mähteileinheit 6, 7 um in etwa 180° schwenkbar ist, wobei ferner im Bereich jeder Mäheinheit 4, 5 die beiden Mähteileinheiten 6, 8 bzw. 7, 9 gemeinsam um in etwa 90° verlagerbar sind. Diese Winkelangaben beziehen sich auf ideale Bodenverhältnisse, bei welchen das Zugfahrzeug lotrecht steht und die Mähteileinheiten waagerecht dazu verlaufen. Bei unebenen Bodenverhältnissen, wo sich Mähteileinheiten beispielsweise einer Bodenneigung angepasst haben, müssen diese Anpassungswinkel ggf. den oben genannten Schwenkwinkeln hinzugerechnet oder abgezogen werden.

Bei kompaktbauenden Mähteileinheiten, bei welchen die äußeren Mähteileinheiten 8, 9 in der vertikalen Transportposition einen Abstand zueinander aufweisen, können diese selbstverständlich auch näher aneinander geschwenkt werden. Ausgehend von den oben genannten idealen Bodenverhältnissen können solche Mähteileinheiten 6, 8 bzw. 7, 9 gemeinsam um in etwa 100° um die Drehachsen 12 bzw. 13 verlagert werden.

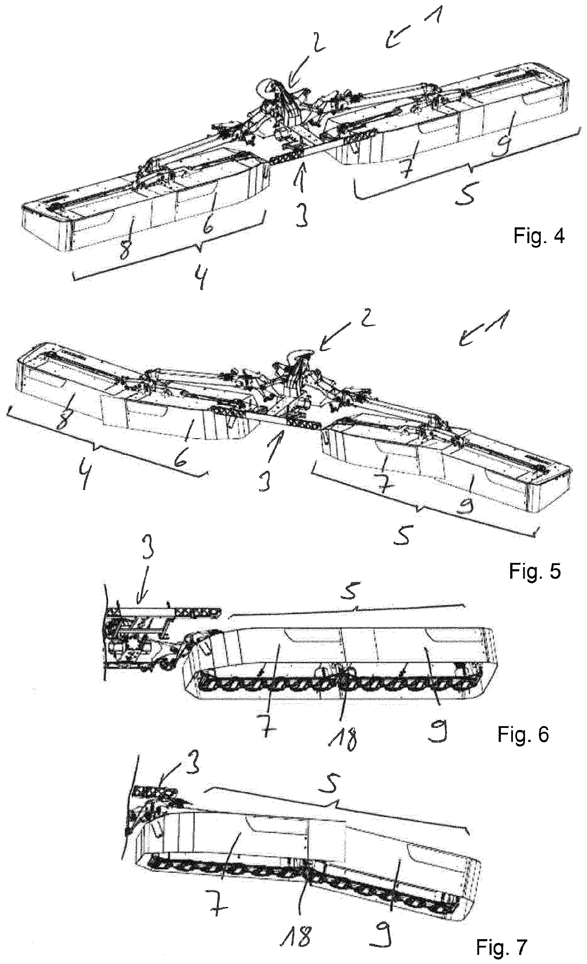

Wie am besten Fig. 4 entnommen werden kann, fluchten in der Arbeitsstellung des Heckmähwerks 1 im Bereich jeder Mäheinheit 4, 5 die jeweiligen Mähteileinheiten 6, 8 bzw. 7, 9 quer zur Fahrtrichtung gesehen.

Im Unterschied hierzu ist es auch möglich, dass die Mähteileinheiten 6, 8 bzw. 7, 9 im Bereich jeder Mäheinheit 4, 5 derart zueinander versetzt sein können, dass dieselben in Fahrtrichtung gesehen einen Versatz aufweisen, dass also in Fahrtrichtung gesehen zum Beispiel die äußeren Mähteileinheiten 8, 9 vor oder hinter den inneren Mähteileinheiten 6, 7 positioniert sind. Die obigen Ausführungen zur Überführung des Heckmähwerks 1 zwischen der Arbeitsstellung und derTransportstellung gelten vollumfänglich auch für ein Heckmähwerk, dessen Mäheinheiten derart zueinander versetzte Mähteileinheiten aufweisen.

Dann, wenn das Heckmähwerk 1 in die Transportstellung der Fig. 3 verlagert ist, ist das gesamte Heckmähwerk 1 in einem an ein Zugfahrzeug angekoppelten Zustand mit Hilfe eines Hubwerks des Zugfahrzeugs absenkbar und anhebbar, wobei über das Absenken die Höhe desselben im Straßeneinsatz weiter reduziert werden kann. Zum Verlagern des Heckmähwerks 1 aus der Transportstellung in die Arbeitsstellung ist dasselbe aus der abgesenkten Position heraus über das Hubwerk des Zugfahrzeugs anhebbar.

Die Erfindung betrifft weiterhin ein Zuggespann aus einem Zugfahrzeug und einem solchen vorzugsweise als Heckmähwerk 1 ausgebildeten Mähwerk.

Dann, wenn das Heckmähwerk 1 aus der Arbeitsstellung der Fig. 1 in die Transportstellung der Fig. 3 verlagert werden soll, werden zunächst im Bereich jeder Mäheinheit 4, 5 die in Arbeitsstellung äußeren Mähteileinheiten 8, 9 um die jeweilige erste Achse 10, 11 in der jeweiligen Schwenkrichtung 14, 17 zur jeweiligen inneren Mähteileinheit 6, 7 verlagert, und zwar in die Zwischenposition der Fig. 2. Darauffolgend werden im Bereich jeder Mäheinheit 4, 5 die jeweilige äußere und innere Mähteileinheit 6, 8 bzw. 7, 9 gemeinsam in der jeweiligen Schwenkrichtung 16 bzw. 17 um die jeweilige zweite Achse 12 bzw. 13 verlagert, und zwar ausgehend von der in Fig. 2 gezeigten Zwischenstellung mit horizontaler Ausrichtung der Mähteileinheiten 6, 8 bzw. 7, 9 in die Transportstellung der Fig. 3 mit vertikaler Ausrichtung der Mähteileinheiten 6, 8 bzw. 7, 9.

Zur umgekehrten Überführung des Heckmähwerks 1 aus der Transportstellung der Fig. 3 in die Arbeitsstellung der Fig. 1 werden zunächst im Bereich jeder Mäheinheit 4, 5 die jeweiligen Mähteileinheit 6, 8 bzw. 7, 9 jeweils gemeinsam in der vertikalen Ausrichtung der Fig. 3 in die horizontale Ausrichtung der Fig. 2 überführt, wobei nachfolgend im Bereich jeder Mäheinheit 4, 5 die jeweilige in Arbeitsstellung äußere Mähteileinheit8, 9 in der jeweils gleichen Schwenkrichtung relativ zur inneren Mähteileinheit 6, 7 um die jeweilige erste Achse 10, 11 verlagert wird.

Eine weitere Besonderheit des erfindungsgemäßen Heckmähwerks 1 folgt insbesondere aus Fig. 5 bis 7. So kann Fig. 5 bis 7 entnommen werden, dass im Bereich jeder Mäheinheit 4, 5 in der Arbeitsstellung die Mähteileinheiten 6, 8 bzw. 7, 9 in definiertem Umfang relativ zueinander verlagerbar sind, nämlich um ein Drehgelenk 18, um so eine Anpassung an Bodenunebenheiten zu ermöglichen. In der Arbeitsstellung des Heckmähwerks 1 ist dieses Drehgelenk 18 an die jeweiligen Teileinheiten 6, 8 bzw. 7, 9 gekoppelt und damit in einer Arbeitsposition verriegelt, um die Bodenanpassung zu ermöglichen. Die - in etwa parallel zur Fahrtrichtung ausgerichtete - Drehachse des Drehgelenkes 18 ist vorzugsweise in etwa der Schnittebene der Mähteileinheiten 6,8 bzw. 7, 9 angeordnet. Zum Verschwenken des Heckmähwerks 1 in die Transportstellung hinein ist hingegen das jeweilige Drehgelenk 18 von den Mähteileinheiten 6, 8 bzw. 7, 9 entkoppelt und damit entriegelt, damit die Mähteileinheiten 8, 9 aus der Arbeitsstellung heraus in die Transportstellung verlagerbar sind. Ein solches beispielhaftes verriegelbares und entriegelbares Drehgelenk ist bereits aus der DE 103 10 322 A1 bekannt.

### Bezugszeichenliste

- 1: Mähwerk / Heckmähwerk
- 2: Koppelelement
- 3: Tragstruktur
- 4: Mähwerkeinheit / Mäheinheit
- 5: Mähwerkeinheit / Mäheinheit
- 6: Mähwerkteileinheit / Mähteileinheit
- 7: Mähwerkteileinheit / Mähteileinheit
- 8: Mähwerkteileinheit / Mähteileinheit
- 9: Mähwerkteileinheit / Mähteileinheit
- 10: Achse
- 11: Achse
- 12: Achse
- 13: Achse
- 14: Schwenkrichtung
- 15: Schwenkrichtung
- 16: Schwenkrichtung
- 17: Schwenkrichtung
- 18: Drehgelenk

## Patentansprüche

1. Landwirtschaftliches Mähwerk (1) für ein landwirtschaftliches Zugfahrzeug, welches an das Zugfahrzeug ankoppelbar und vom Zugfahrzeug bewegbar ist, wobei das Mähwerk (1) eine erste Mähwerkeinheit (4), die in einer Arbeitsstellung des Mähwerks (1) an einer ersten Seite des Zugfahrzeugs gegenüber demselben quer zur Fahrtrichtung vorsteht, und eine zweite Mähwerkeinheit (5), die in Arbeitsstellung des Mähwerks (1) an einer zweiten Seite des Zugfahrzeugs gegenüber demselben quer zur Fahrtrichtung vorsteht, aufweist, und wobei die Mähwerkeinheiten zwischen der Arbeitsstellung und einer Transportstellung verlagerbar sind, wobei die erste Mähwerkeinheit (4) und die zweite Mähwerkeinheit (5) jeweils eine in Arbeitsstellung innere Mähwerkteileinheit (6, 7) und eine in Arbeitsstellung äußere Mähwerkteileinheit (8, 9) umfassen, wobei im Bereich jeder Mähwerkeinheit (4, 5) die jeweilige äußere Mähwerkteileinheit (8, 9) in einer definierten Schwenkrichtung (14, 17) um eine erste Achse (10, 11) zur jeweiligen inneren Mähwerkteileinheit (6, 7) sowie die jeweilige äußere und innere Mähwerkteileinheit (6, 8, 7, 9) gemeinsam in der gleichen Schwenkrichtung (16, 15) um eine zweite Achse (12, 13) verlagerbar sind, wobei im Bereich der ersten Mähwerkeinheit (4) die jeweilige in Arbeitsstellung äußere Mähwerkteileinheit (8) um die jeweilige erste Achse (10) zur jeweiligen inneren Mähwerkteileinheit (6) sowie die äußere und innere Mähwerkteileinheit (6, 8) gemeinsam in der gleichen Richtung um die jeweilige zweite Achse (12) schwenkbar sind, und dass im Bereich der zweiten Mähwerkeinheit (5) die jeweilige in Arbeitsstellung äußere Mähwerkteileinheit (9) um die jeweilige erste Achse (11) zur jeweiligen inneren Mähwerkteileinheit (7) sowie die äußere und innere Mähwerkteileinheit (7, 9) gemeinsam in dergleichen Richtung um die jeweilige zweite Achse (13) schwenkbar sind, wobei die Schwenkrichtungen der ersten Mähwerkeinheit (4) zu den Schwenkrichtungen der Mähwerkeinheiten (5) gegenläufig sind, wobei im Bereich jeder Mähwerkeinheit (4, 5) die jeweilige in Arbeitsstellung äußere Mähwerkteileinheit (8, 9) zur jeweiligen inneren Mähwerkteileinheit (6, 7) zwischen einer seitlich neben derselben angeordneten horizontalen Position und einer oberhalb derselben angeordneten horizontalen Position schwenkbar ist, **dadurch gekennzeichnet, dass** die ersten Achsen (10, 11) einen Winkel von bis zu +/- 25° mit der Fahrtrichtung einschließen, so dass die äußeren Mähteileinheiten (8, 9) winkelversetzt auf den inneren Mähteileinheiten (6, 7) liegen und sich beim Verlagern der Mähteileinheiten (6, 8 bzw. 7, 9) in die vertikale Transportstellung im mittleren Bereich ein Freiraum ergibt.

2. Mähwerk nach Anspruch 1, **dadurch gekennzeichnet, dass** im Bereich jeder Mähwerkeinheit (4, 5) die jeweilige in Arbeitsstellung äußere Mähwerkteileinheit (8, 9) zur jeweiligen inneren Mähwerkteileinheit (7, 9) um in etwa 180° schwenkbar ist.

3. Mähwerk nach einem der Ansprüche 1 bis 2, **dadurch gekennzeichnet, dass** im Bereich jeder Mähwerkeinheit (4, 5) die jeweilige äußere und innere Mähwerkteileinheit (6, 8, 7, 9) gemeinsam zwischen einer horizontalen Position, in der die jeweilige in Arbeitsstellung äußere Mähwerkteileinheit (6, 8) oberhalb der jeweiligen inneren Mähwerkteileinheit (7, 9) angeordnet ist, und einer vertikalen Position, in der die in Arbeitsstellung äußeren Mähwerkteileinheiten (8, 9) einander zugewandt und die inneren Mähwerkteileinheiten (7) voneinander abgewandt sind, verlagerbar sind.

4. Mähwerk nach einem der Ansprüche 1 bis 3, **dadurch gekennzeichnet, dass** im Bereich jeder Mähwerkeinheit (4, 5) die jeweilige äußere Mähwerkteileinheit (8, 9) und innere Mähwerkteileinheit (6, 7) gemeinsam um in etwa 90° bis 100° verlagerbar sind.

5. Mähwerk nach einem der Ansprüche 1 bis 4, **dadurch gekennzeichnet, dass** im Bereich jeder Mähwerkeinheit (4, 5) in der Arbeitsstellung die Mähwerkteileinheiten (6, 8, 7, 9) zur Anpassung an Bodenunebenheiten relativ zueinander verlagerbar sind.

6. Mähwerk nach einem der Ansprüche 1 bis 5, **dadurch gekennzeichnet, dass** dasselbe ein Heckmähwerk (1) mit einer ersten und zweiten seitlichen Mäheinheit (4, 5) ist, wobei jeder der Mäheinheiten eine innere und äußere Mähteileinheit (6, 8, 7, 9) umfasst.

7. Mähwerk nach einem der vorangehenden Ansprüche, **dadurch gekennzeichnet, dass** sich die zweiten Achsen (12, 13) in etwa in Fahrtrichtung erstrecken oder jeweils einen Winkel von bis zu +/- 25° mit der Fahrtrichtung einschließen und /oder die ersten und zweiten Achsen (10, 11; 12, 13) etwa horizontal ausgerichtet sind oder gegenüber der Horizontalen um bis zu +/- 5° geneigt angeordnet sind.

8. Landwirtschaftliches Zuggespann, mit einem landwirtschaftlichen Zugfahrzeug und mit einem am Zugfahrzeug montierten landwirtschaftlichen Mähwerk (1), **dadurch gekennzeichnet, dass** das Mähwerk (1) nach einem der Ansprüche 1 bis 7 ausgebildet ist.

9. Zuggespann nach Anspruch 8, **dadurch gekennzeichnet, dass** das Mähwerk (1) in der Transportstellung über ein Hubwerk des Zugfahrzeugs absenkbar und anhebbar ist.

## Claims

1. Agricultural mower (1) for an agricultural tractor, which can be coupled to the tractor and moved by the tractor, wherein the mower (1) has a first mower unit (4) which, in a working position of the mower (1), projects from the tractor on a first side of the latter, transversely to the direction of travel, and a second mower unit (5) which, in the working position of the mower (1), projects from the tractor on a second side of the latter, transversely to the direction of travel, and wherein the mower units can be moved between the working position and a transport position, wherein the first mower unit (4) and the second mower unit (5) each comprise an inner mower sub-unit (6, 7) in the working position and an outer mower sub-unit (8, 9) in the working position, wherein, in the region of each mower unit (4, 5), the respective outer mower sub-unit (8, 9) can be moved in a defined swivel direction (14, 17) about a first axis (10, 11) relative to the respective inner mower sub-unit (6, 7), and the respective outer and inner mower sub-units (6, 8, 7, 9) can be moved together in the same swivel direction (16, 15) about a second axis (12, 13), wherein, in the region of the first mower unit (4), the respective outer mower sub-unit (8) in the working position can be swivelled about the respective first axis (10) relative to the respective inner mower sub-unit (6), and the outer and inner mower sub-units (6, 8) can be swivelled together in the same direction about the respective second axis (12), and that, in the region of the second mower unit (5), the respective outer mower sub-unit (9) in the working position can be swivelled about the respective first axis (11) relative to the respective inner mower sub-unit (7), and the outer and inner mower sub-units (7, 9) can be swivelled together in the same direction about the respective second axis (13), wherein the swivel directions of the first mower unit (4) are contrary to the swivel directions of the mower units (5), wherein, in the region of each mower unit (4, 5), the respective outer mower sub-unit (8, 9) in the working position can be swivelled relative to the respective inner mower sub-unit (6, 7) between a horizontal position arranged laterally next to the latter and a horizontal position arranged above the latter, **characterized in that** the first axes (10, 11) enclose an angle of up to +/-25° with the direction of travel such that the outer mower sub-units (8, 9) are located in an angularly offset manner with respect to the inner mower sub-units (6, 7) and when the mower sub-units (6, 8 and 7, 9) are moved into the vertical transport position, a clearance arises in the central region.

2. Mower according to Claim 1, **characterized in that**, in the region of each mower unit (4, 5), the respective outer mower sub-unit (8, 9) in the working position can be swivelled relative to the respective inner mower sub-unit (7, 9) by around 180°.

3. Mower according to either of Claims 1 and 2, **characterized in that**, in the region of each mower unit (4, 5), the respective outer and inner mower sub-units (6, 8, 7, 9) can be moved together between a horizontal position, in which the respective outer mower sub-unit (6, 8) in the working position is arranged above the respective inner mower sub-unit (7, 9), and a vertical position, in which the outer mower sub-units (8, 9) in the working position face one another and the inner mower sub-units (7) face away from one another.

4. Mower according to one of Claims 1 to 3, **characterized in that**, in the region of each mower unit (4, 5), the respective outer mower sub-unit (8, 9) and inner mower sub-unit (6, 7) can be swivelled together by around 90° to 100°.

5. Mower according to one of Claims 1 to 4, **characterized in that**, in the region of each mower unit (4, 5), in the working position, the mower sub-units (6, 8, 7, 9) can be moved relative to one another in order to adapt to uneven terrain.

6. Mower according to one of Claims 1 to 5, **characterized in that** the mower is a rear mower (1) with a first and second lateral mower unit (4, 5), wherein each of the mower units comprises an inner and outer mower sub-unit (6, 8, 7, 9).

7. Mower according to one of the preceding claims, **characterized in that** the second axes (12, 13) extend approximately in the direction of travel or each enclose an angle of up to +/-25° with the direction of travel and/or the first and second axes (10, 11; 12, 13) are oriented approximately horizontally or are arranged so as to be inclined by up to +/-5° in relation to the horizontal.

8. Agricultural tractor combination having an agricultural tractor and an agricultural mower (1) mounted on the tractor, **characterized in that** the mower (1) is configured according to one of Claims 1 to 7.

9. Tractor combination according to Claim 8, **characterized in that**, in the transport position, the mower (1) can be lowered and raised via a lift mechanism on the tractor.

## Revendications

1. Tête de fauchage agricole (1) pour un véhicule tracteur agricole, laquelle peut être couplée au véhicule tracteur et déplacée par le véhicule tracteur, la tête de fauchage (1) comportant une première unité de tête de fauchage (4), qui, dans une position de travail de la tête de fauchage (1), dépasse du véhicule tracteur transversalement au sens de la marche sur un premier côté de celui-ci, et une seconde unité de tête de fauchage (5) qui, dans la position de travail de la tête de fauchage (1), dépasse du véhicule tracteur transversalement au sens de la marche sur un second côté de celui-ci, et les unités de tête de fauchage étant translatables entre la position de travail et une position de transport, la première unité de tête de fauchage (4) et la seconde unité de tête de fauchage (5) comportant chacune une unité partielle de tête de fauchage (6, 7) intérieure dans la position de travail et une unité partielle de tête de fauchage (8, 9) extérieure dans la position de travail, dans la zone de chaque unité de tête de fauchage (4, 5) l'unité partielle de tête de fauchage respectivement extérieure (8, 9) étant déplaçable dans une direction de pivotement définie (14, 17) autour d'un premier axe (10, 11) par rapport à l'unité partielle de tête de fauchage respectivement intérieure (6, 7) de même que les unités partielles de tête de fauchage respectivement extérieure et intérieure (6, 7, 8, 9) sont déplaçables conjointement dans la même direction de pivotement (16, 15) autour d'un second axe (12, 13), dans la zone de la première unité de tête de fauchage (4) l'unité partielle de tête de fauchage (8) respectivement extérieure dans la position de travail pouvant pivoter autour du premier axe respectif (10) par rapport à l'unité partielle de tête de fauchage intérieure (6) de même que les unités partielles de tête de fauchage extérieure et intérieure (6, 8) peuvent pivoter conjointement dans la même direction autour du second axe respectif (12), et que dans la zone de la seconde unité de tête de fauchage (5) l'unité partielle de tête de fauchage (9) respectivement extérieure dans la position de travail pouvent pivoter autour du premier axe respectif (11) par rapport à l'unité partielle de tête de fauchage intérieure (7) de même que les unités partielles de tête de fauchage extérieure et intérieure (7, 9) peuvent pivoter conjointement dans la même direction autour du second axe respectif (13), les directions de pivotement de la première unité de tête de fauchage (4) étant contraires aux directions de pivotement de l'unités de tête de fauchage (5), dans la zone de chaque unité de tête de fauchage (4, 5), l'unité partielle de tête de fauchage (8, 9) respectivement extérieure dans la position de travail pouvant pivoter par rapport à l'unité partielle de tête de fauchage (6, 7) respectivement intérieure entre une position horizontale disposée latéralement à côté de celle-ci et une position horizontale disposée au-dessus de celle-ci, **caractérisée en ce que** les premiers axes (10, 11) forment avec le sens de la marche un angle d'au plus +/-25° de sorte que les unités partielles de tête de fauchage (8, 9) sont situées sur les unités partielles de tête de fauchage (6, 7) en étant décalées angulairement et un espace libre est ménagé dans la zone médiane lors du déplacement des unités partielles de tête de fauchage (6, 8 resp. 7, 9) dans la position de transport verticale.

2. Tête de fauchage selon la revendication 1, **caractérisée en ce que** dans la zone de chaque unité de tête de fauchage (4, 5), l'unité partielle de tête de fauchage (8, 9) respectivement extérieure dans la position de travail peut pivoter d'environ 180° par rapport à l'unité partielle de tête de fauchage (7, 9) respectivement inférieure.

3. Tête de fauchage selon une des revendications 1 à 2, **caractérisée en ce que** dans la zone de chaque unité de tête de fauchage (4, 5) les unités partielles de tête de fauchage respectivement extérieure et intérieure (6, 8, 7, 9) sont translatables conjointement entre une position horizontale, dans laquelle l'unité partielle de tête de fauchage (6, 8) respectivement extérieure dans la position de travail est disposée au-dessus de l'unité partielle de tête de fauchage (7, 9) respectivement intérieure, et une position verticale dans laquelle les unités partielles de tête de fauchage (8, 9) extérieures dans la position de travail sont orientées l'une vers l'autre et les unités partielles de tête de fauchage intérieures (7) sont orientées à l'opposé l'une de l'autre.

4. Tête de fauchage selon une des revendications 1 à 3, **caractérisée en ce que** dans la zone de chaque unité de tête de fauchage (4, 5) l'unité partielle de tête de fauchage (8, 9) respectivement extérieure et l'unité partielle de tête de fauchage (6, 7) intérieure sont déplaçables conjointement d'environ 90° à 100°.

5. Tête de fauchage selon une des revendications 1 à 4, **caractérisée en ce que** dans la zone de chaque unité de tête de fauchage (4, 5), les unités partielles de tête de fauchage (6, 8, 7, 9) dans la position de travail sont déplaçables l'une par rapport à l'autre pour s'adapter aux irrégularités du sol.

6. Tête de fauchage selon une des revendications 1 à 5, **caractérisée en ce qu'**elle comporte une tête de fauchage arrière (1) avec une première et une seconde unité de fauchage latérale (4, 5), chacune des unités de fauchage comprenant une unité de fauchage intérieure et extérieure (6, 8, 7, 9).

7. Tête de fauchage selon une des revendications précédentes, **caractérisée en ce que** les seconds axes (12, 13) s'étendent sensiblement dans le sens de la marche ou forment avec le sens de la marche respectivement un angle d'au plus +/-25° et/ou les premiers et seconds axes (10, 11 ; 12, 13) sont orientés sensiblement horizontalement ou inclinés par rapport à l'horizontale d'au plus +/-5°.

8. Attelage agricole tracté comprenant un véhicule tracteur agricole et comprenant une tête de fauchage agricole (1) montée sur le véhicule tracteur, **caractérisé en ce que** la tête de fauchage (1) est conformée selon une des revendications 1 à 7.

9. Attelage tracté selon la revendication 8, **caractérisé en ce que**, dans la position de transport, la tête de fauchage (1) peut être abaissée et levée par l'intermédiaire d'un mécanisme de levage du véhicule tracteur.
